**Europäisches Patentamt**

**European Patent Office**

**Office européen des brevets**

(19)

(11) Veröffentlichungsnummer: **0 278 021 B1**

(12) **EUROPÄISCHE PATENTSCHRIFT**

(45) Veröffentlichungstag der Patentschrift: **10.04.91**

(51) Int. Cl.5: **G01L 1/22**

(21) Anmeldenummer: **87101733.1**

(22) Anmeldetag: **09.02.87**

(54) Dehnungsmessstreifen mit einer dünnen diskontinuierlichen Metallschicht.

(43) Veröffentlichungstag der Anmeldung:
**17.08.88 Patentblatt 88/33**

(45) Bekanntmachung des Hinweises auf die
Patenterteilung:
**10.04.91 Patentblatt 91/15**

(84) Benannte Vertragsstaaten:
**CH DE FR GB IT LI NL**

(56) Entgegenhaltungen:
EP-A- 0 017 982
US-A- 2 556 132
US-A- 2 621 276

THIN SOLID FILMS, Band 137, Nr. 1, März
1986, Seiten L43-L46, Lausanne, CH; ST.
TRAPP et al.: "Generation of high sensitivity
strain gauges by means of tunnelling in discontinuous metallic films"

(73) Patentinhaber: **BASF Aktiengesellschaft**
**Carl-Bosch-Strasse 38**
**W-6700 Ludwigshafen(DE)**

(72) Erfinder: **Fuchs, Harald, Dr.**
**In den Maulgaerten 17**
**W-6718 Gruenstadt(DE)**
Erfinder: **Gleiter, Herbert, Prof. Dr.**
**Daimlerstrasse 29**
**W-6600 Saarbruecken(DE)**
Erfinder: **Trapp, Stephen**
**Hauptstrasse 10**
**W-6689 Meschweiler(DE)**
Erfinder: **Petermann, Juergen, Prof. Dr.**
**Westpreussenweg 12**
**W-2150 Buxtehude(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft hochempfindliche Dehnungsmeßstreifen mit einer dünnen diskontinuierlichen Metallschicht, die ihren Widerstand bei Dehnung ändert und eine verbesserte Stabilität aufweist.

Dehnungsmeßstreifen als Meßwertgeber für Dehnungsmesser, denen der physikalische Effekt zugrundeliegt, daß ein elektrischer Leiter seinen Widerstand bei mechanischer Beanspruchung, z.B. Dehnung ändert, sind lange Zeit bekannt und dienen z.B. der Erfassung von Dehnungen von Bauteilen durch statische oder dynamische Belastungen. Bei konventionellen Draht- bzw. Folien-Dehnungsmeßstreifen ist im allgemeinen ein in Windungen gelegter Draht in Kunststoff eingebettet und wird fest mit dem zu untersuchenden Objekt verbunden. Durch die lineare Kopplung von Dehnung und Widerstandsänderung können Dehnungen $\epsilon$ von unter $10^{-6}$ nicht mehr aufgelöst werden. Zum Stand der Technik sei z.B. auf die US-A 2 556 132 und 2 621 276 sowie die Monographie "Strain Gauge Technology" von A.L. Window and G.S. Holister, Applied Science Publishers Ltd., Essex, England, 1982, verwiesen. Halbleiterdehnungsmeßstreifen zeigen eine höhere Empfindlichkeit, jedoch den Nachteil einer starken Temperaturabhängigkeit.

In manchen Gebieten wie bei der Erforschung von Kriechvorgängen, der unelastischen Deformation, Phasenübergängen, geologischen Deformationsvorgängen in Fels oder Eis bis etc. ist jedoch die Messung von Dehnungen $\epsilon$ von kleiner als $10^{-6}$ bedeutsam.

Untersuchungen über diskontinuierliche Metallschichten auf Dielektrika wie Schichten von Gold, Silber, Palladium oder Zinn auf Glas, Quarzsubstraten oder Kunststoffilmer sind bekannt (vgl. Advances in Physics 24, 407-461 (1975); J.Appl. Physics, Vol.34, 2700-2708 (1963) Thin Solid Films, Band 137, Nr. 1, März 1986, Seiten L43-L46, Lausanne, CH, ST.TRAPP et al. : "Generation of high sensitivity otrain gauges by means of tunnelling discontinuous metallic films"). Nachteilig bei den untersuchten Systemen ist ihre strukturelle Instabilität aufgrund von diffusionskontrollierten Reifungsvorgängen in den diskontinuierlichen Metallschichten, die zu einer Verschiebung der Abstandsverteilung zwischen den metallischen Inseln der Schicht zu größeren Abständen hinführt. Dies führt zu einem schnellen Ansteigen des elektrischen Widerstandes der untersuchten diskontinuierlichen Metallschichten und letztlich zur Unterdrückung der Tunnelströme in der diskontinuierlichen Metallschicht und zur elektrischen Isolation.

Der vorliegenden Erfindung liegt die Aufgabe zugrunde, hochempfindliche Dehnungsmeßstreifen zu finden, die für Meßzwecke der Technik hinreichend zeitlich stabil sind.

Es wurde nun gefunden, daß die Aufgabe gelöst werden kann mit der Herstellung von Dehnungsmeßstreifen, bei denen die dünne diskontinuierliche Metallschicht gleichmäßig auf ein Substrat aufgebracht wird, das durch Wechselwirkung mit dem Metall beim und/oder nach dem Aufbringen die Diffusionen in und somit die oben beschriebene strukturelle Instabilität der diskontinuierlichen Metallschicht durch Verschiebung der Abstände der Metallinseln stark herabsetzt.

Gegenstand der Erfindung sind somit Dehnungsmeßstreifen der in den Ansprüchen angegebenen Art.

Bei den erfindungsgemäß für die Dehnungsmeßstreifen verwandten dünnen, diskontinuierlichen Metallschichten handelt es sich um dünnste Schichten von inselbildenden Metallen wie Gold, Zinn, Zink, Indium, Cadmium, Antimon oder Selen, wie sie sich insbesondere durch Aufdampfen oberhalb ihres Schmelzpunktes im Hochvakuum gleichmäßig in diskontinuierlicher Schicht aufbringen lassen. Die Größe der Metallcluster beträgt dabei im allgemeinen nicht mehr als 200 Å und bevorzugt ca. 30 bis 50 Å. Die durchschnittliche Dicke der aufgebrachten diskontinuierlichen Metallschichten liegt im allgemeinen bei 30 bis 500 Å und insbesondere bei 50 bis 200 Å und richtet sich außer nach dem verwendeten Metall nach dem für den speziellen Verwendungszweck günstigen Widerstandswert der Metallschicht, deren Leitungsmechanismus vorwiegend auf dem Tunneleffekt beruht (Tunnelstrom). Zum Aufbringen der Metallschicht sind auch andere bekannte Verfahren geeignet wie die Kathodenzerstäubung, Elektronenstrahlverdampfung oder eine Zersetzung einer metallorganischen Verbindung auf dem Substrat, z.B. auf einem erhitzten Substrat. Auch elektrolytische Verfahren der Metallabscheidung können in Betracht kommen. Im gleichen Arbeitsgang wie das Aufbringen der Metallschicht können auch Ableitelektroden aufgebracht werden, die aber oft erst später vor der Anwendung aufgebracht werden.

Ein wesentliches Kennzeichen der erfindungsgemäßen Dehnungsmeßstreifen und ihrer Herstellung ist das Aufbringen auf Substrate, die durch Wechselwirkung mit dem Metall der Metallschicht die mögliche Diffusion der Metalle der Schicht stark herabsetzen. Dies kann durch Erhöhung der Diffusionsbarrieren oder aber auch durch Erzeugen eines abschirmenden Films auf der metallischen Phase erfolgen. So hat sich gezeigt, daß durch die Verwendung von Substraten mit geordneten Strukturen, orientierten bzw. kristallinen Strukturbereichen eine Orientierung in der abgeschiedenen Metallschicht erfolgt, die ihre Diffusionsprozesse stark herabsetzt und ihre strukturelle Stabilität erhöht. So werden bei Verwendung dünner uniaxial orientierter Kunststoffilme wie Polyethylen-, Polypropylen- oder Polybutylen-1-Filme Zinn, Indium, Zink und Cadmium epitaktisch bei Aufdampfen im Hochvakuum abgeschieden und die resultierenden diskontinuierlichen Metallschichten zeigen stark herabgesetzte Diffusionsprozesse und die gewünschte strukturelle Stabilität. Ähnlich verläuft das Aufdampfen von Zinn und Indium bei uniaxial orientierten Filmen aus isotaktischen Polystyrol. Die dichtest gepackten kristallographischen Richtungen verlaufen dabei parallel zur Kettenrichtung. Die orientierten Substratfilme haben insbesondere eine Stärke von 25 bis 1000 und bevorzugt von 200 bis 500 Å.

Ähnlich führt das Aufbringen der Metallschichten auf Polymere mit kristallinen Anteilen z.B. teilkristalline Polydiacetylene, Polyethylenterephthalate oder Polyamide zu einer Wechselwirkung mit den Metallschichten und herabgesetzten Diffusionsprozessen in ihnen. Ähnliches gilt für geordnete ultradünne Schichten einer Schichtstärke von unter 0,1 $\mu$m als Substrate, die vorteilhaft mit der Langmuir-Blodgett-Technik (vgl. Thin Solid Films Vol. 99, Seiten 1-328 (1983)) oder auch durch Flüssigphasenadsorption direkt auf die zu messenden Probekörper, z.B. Werkstücke, aufgebracht werden können. In Betracht kommen hier auch die Gasphasenabscheidung (PVD, CVD). Die mit der Langmuir-Blodgett-Technik hergestellten ultradünnen Filme können z.B. aus Salzen, insbesondere Barium-, Calcium-oder Magnesiumsalzen der Stearinsäure oder Palmitinsäure oder aus Diacetylenfettsäuren hergestellt sein. Solche Filme, z.B. aus Diacetylenfettsäuren, können zusätzlich zur Erhöhung ihrer lateralen Stabilität auch durch Strahlung polymerisiert oder vernetzt sein.

Die Aufdampftechniken gestatten eine bildmäßige Strukturierung der Substrate bzw. der aufgebrachten aktiven Metallschichten. Damit lassen sich spezielle Muster in Abhängigkeit vom Meßproblem erzeugen.

Darüber hinaus gestattet es die mikroskopische Ausdehnung der leitenden Bereiche und der isolierenden Zwischenbereiche im Vergleich zu klassischen Dehnungsmeßstreifen sehr kleine Sensoren herzustellen (< 1 mm²). Gegebenenfalls kann ein Gitter aus solchen dehnungsempfindlichen Sensoren zur Abbildung von Reißverteilungen auf Festkörperoberflächen herangezogen werden. Vorzugsweise werden hierzu gut an der Oberfläche haftende spröde Substratfilme eingesetzt, die geringe Dehnungen auf die diskontinuierliche Metallschicht übertragen.

Für diskontinuierliche Schichten von inerten Metallen, insbesondere Edelmetallen und bevorzugt von Gold, haben sich als dünne Substrate auch beschichtete Kunststoffilme und insbesondere silikonbeschichtete Kunststoffilme wie Polyethylenfilme bewährt, wobei die Silikonschicht bevorzugt

kleiner als 10 $\mu$m und das Substrat bevorzugt kleiner als 100 $\mu$m dick ist. Hier wird wohl durch Erzeugung eines abschirmenden Filmes auf der metallischen Phase eine starke Unterdrückung der Diffusion in der diskontinuierlichen Metallschicht erzielt.

Soweit die Substrate nicht direkt auf die Probenkörper aufgebracht werden, sollen sie dimensionsstabil (z.B. spröde) und in der Lage sein, auch sehr geringe Dehnungen vom Probenkörper auf die diskontinuierliche Metallschicht zu übertragen. Von Vorteil ist eine hinreichende Haftung gegenüber den Probenkörpern, die auch mit Klebstoffen, z.B. Epoxidkleber oder Polyurethanen, oder mit Klebeband hergestellt werden kann.

In manchen Fällen, z.B. bei bestimmten Metallen, z.B. Selen, in den diskontinuierlichen Metallschichten, ist es sehr zweckmäßig, über die Metallschicht noch eine dünne Deckschicht aufzubringen, z.B. aufzudampfen, z.B. SiO-Schichten oder Paraffinschichten, die auch als Schutz gegen chemische Einflüsse, z.B. durch Sauerstoff oder Feuchtigkeit dienen können. Oft kann auch durch eine solche Deckschicht die strukturelle Instabilität der diskontinuierlichen Metallschicht des Dehnungsmeßstreifens noch verbessert werden.

Die erfindungsgemäßen Dehnungsmeßstreifen zeichnen sich durch eine hohe Empfindlichkeit, die mehr als eine Größenordnung über der konventioneller Dehnungsmeßstreifen liegt, aus. Sie weisen zudem nach einer anfänglichen Alterungsperiode bezüglich des Widerstandanstiegs der Dehnungsmeßstreifen eine gute zeitliche Stabilität auf. Gegenüber konventioneller Meßstreifen kann die Meßlänge auf 1 mm und darunter verkleinert werden. Sie sind nicht nur einfach herzustellen, sondern ebenso einfach in bekannter Art mit Ableitelektroden zu versehen und mit bekannten Widerstandsmeßgeräten zu messen.

Das nachstehende Beispiel soll die Erfindung weiter erläutern.

Beispiel

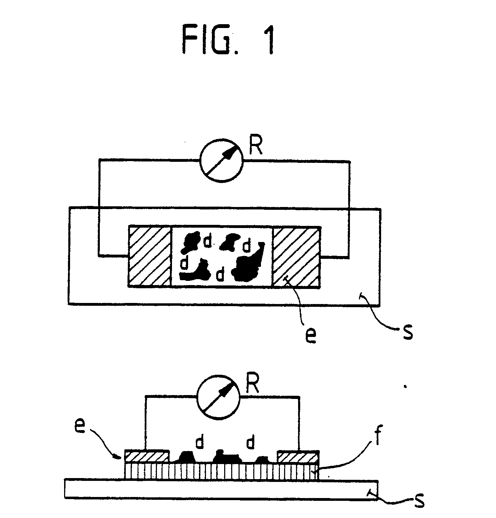

Die Tunnel-Dehnungsstreifen wurden durch thermisches Verdampfen von Gold in einem Vakuum von $10^{-4}$ Pa hergestellt. Substrat war eine siliconbeschichtete Hochdruckpolyethylen-Folie, auf die ein diskontinuierlicher Goldfilm mit einer mittleren Dicke von 13 nm aufgebracht wurde. Das Trägersubstrat wurde in einem ersten Arbeitsgang mit etwa 2 $\mu$m dicken Ableitelektroden versehen, zwischen denen mit Hilfe einer Maske ein 0,5 × 6 mm breiter Streifen erzeugt wurde. Nach Entfernen der Maske wurde der eigentliche Sensor in diesem Streifen erzeugt, wobei während der Messung der Widerstand des Sensors kontinuierlich überwacht wurde. Bei einem Gesamtwiderstand von 8 MΩ wurde die Bedampfung beendet und der fertiggestellte Meßstreifen auf die gereinigte Oberfläche eines Edelstahlstabes geklebt (Fig. 1). Der Abstand der Elektroden beträgt 0,5 mm, die Breite des Films 6 mm. In Fig. 1 stellt f das Substrat, d den aufgedampften Goldfilm, e die Ableitelektroden, s das zu untersuchende Edelstahlsubstrat und R das Widerstandsmeßgerät dar.

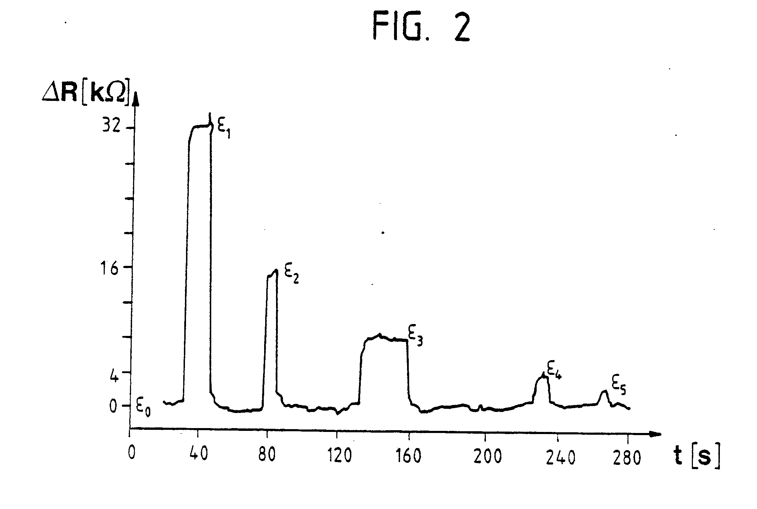

Der Edelstahlstab mit dem aufgeklebten Dehnungsmeßstreifen wurde in eine Vierpunktdehneinrichtung eingebaut, und es wurden die relativen Widerstandsänderungen $\Delta R/R$ bei verschiedenen Dehnungen ($\epsilon = \Delta l/l$) bestimmt. Dabei wurden die Dehnungen zwischen $10^{-6}$ und $2 \cdot 10^{-5}$ variiert. Fig. 2 gibt die Widerstandsänderung $\Delta R$ (kΩ) des Meßstreifens in Abhängigkeit der Zeitdauer der verschiedenen Belastungen wieder, wobei die scharfen Spitzen, die in den belasteten Zuständen $\epsilon_1$ und $\epsilon_4$ auftreten, durch Vibrationen beim Abheben der Lasten verursacht wurden. Die aufgeprägten Dehnungen betrugen: $\epsilon_0 = 0$, $\epsilon_1 = 20,068 \cdot 10^{-6}$, $\epsilon_2 = 10,084 \cdot 10^{-6}$, $\epsilon_3 = 5.017 \cdot 10^{-6}$, $\epsilon_4 = 2.068 \cdot 10^{-6}$, $\epsilon_5 = 1.035 \cdot 10^{-6}$. Beim Auftragen der Werte $\Delta R/R \cdot 10^{-4}$ gegen $\epsilon \cdot 10^{-6}$ als Widerstands-Dehnungs-Charakteristik ergibt sich im Dehnungsbereich eine lineare Änderung des Widerstands. Die Empfindlichkeit $k = (\Delta R/R)/(\Delta l/l)$ des Meßstreifens ergibt $k = 125 \pm 10$, verglichen mit einer Empfindlichkeit $k = 2$ bei konventionellen Dehnungsmeßstreifen.

Der Flächenwiderstand des Dehnungsmeßstreifens ändert sich reversibel im Temperaturbereich zwischen 253 und 293 K. Der "Alterungsprozeß", d.h. die allmählichen Veränderungen im Widerstand der so hergestellten Meßstreifen ist bei normalen Umgebungsbedingungen innerhalb weniger Tage abgeschlossen.

## Ansprüche

1. Dehnungsmeßstreifen, im wesentlichen bestehend aus einer dünnen diskontinuierlichen Metallschicht (d), deren Leitungseffekt vorwiegend auf dem Tunneleffekt beruht, gleichmäßig aufgebracht auf ein nichtmetallisches, dielektrisch dünnes Substrat (f), wobei durch Wechselwirkung zwischen Substrat und Metallschicht die Diffusionsprozesse in der aufgebrachten Metallschicht herabgesetzt sind, dadurch gekennzeichnet, daß das Substrat (f) ein uniaxial gereckter Kunststoffilm ist.

2. Dehnungsstreifen gemäß Anspruch 1, dadurch gekennzeichnet, daß das Substrat eine geordnete ultradünne Schicht mit einer Schichtstärke von unter 0,1 μm ist.

3. Dehnungsmeßstreifen gemäß Anspruch 1, dadurch gekennzeichnet, daß die aus Zinn, Indium, Zink oder Cadmium bestehende Metallschicht (d) epitaktisch auf dem Substrat abgeschieden ist.

## Claims

1. A strain gauge, consisting essentially of a thin discontinuous metal layer (d) whose conduction effect is based predominantly on the tunnel effect, applied uniformly to a nonmetallic, dielectric thin substrate, the diffusion processes in the applied metal layer being reduced by interaction between the substrate and the metal layer, wherein the substrate (f) is a uniaxially oriented plastic film.

2. A strain gauge as claimed in claim 1, wherein the substrate is an ordered ultrathin layer which is less than 0.1 μm thick.

3. A strain gauge as claimed in claim 1, wherein the metal layer (d) consisting of tin, indium, zinc or cadmium has been deposited epitaxially on the substrate.

## Revendications

1. Jauge extensométrique constituée essentiellement d'une couche métallique mince discontinue (d), dont l'effet de conduction repose principalement sur l'effet tunnel, appliquée uniformément sur un substrat mince diélectrique non métallique (f), l'interaction entre ce substrat et la couche métallique diminuant les phénomènes de diffusion dans la couche métallique appliquée, caractérisée par le fait que le substrat (f) est un film de plastique étiré uniaxialement.

2. Jauge extensométrique selon la revendication 1, caractérisée par le fait que le substrat est une couche ultramince ordonnée d'épaisseur inférieure à 0,1 μm.

3. Jauge extensométrique selon la revendication 1, caractérisée par le fait que la couche métallique (d), constituée d'étain, d'indium, de zinc ou de cadmium, est déposée épitaxiquement sur le substrat.

# FIG. 1

FIG. 2